# EUROPÄISCHE PATENTANMELDUNG

(11) **EP 0 806 526 A2**
(43) Veröffentlichungstag der Anmeldung: **12.11.1997**
(21) Anmeldenummer: 97107516.3
(22) Anmeldetag: 07.05.1997
(51) Int. Cl.: E03C 1/04, E03B 7/07

(54) **Wasserentnahmearmatur**

(30) Priorität: 10.05.1996 DE 19618771
(71) Anmelder: Massholder, Karl F., Dr., 69250 Schönau (DE)
(72) Erfinder: Massholder, Karl F., Dr., 69250 Schönau (DE)
(74) Vertreter: Knoblauch, Andreas, Dr.-Ing.

(57) **Zusammenfassung**

Es wird eine Wasserentnahmearmatur (1) angegeben mit einer Ausflußöffnung (9), die über eine mindestens ein Ventil (5, 6) aufweisende Leitungsstrecke (8, 12) mit einem Versorgungsanschluß (3, 4) verbunden ist.

Wenn derartige Wasserentnahmearmaturen selten benutzt werden, besteht die Gefahr einer Verkeimung. Die hygienischen Verhältnisse sollen aber auch hier verbessert werden können.

Hierzu ist in der Leitungsstrecke (12) eine UV-Strahlungsabgabeeinrichtung (14, 15) angeordnet.

## Beschreibung

Die Erfindung betrifft eine Wasserentnahmearmatur mit einer Ausflußöffnung, die über eine mindestens ein Ventil aufweisende Leitungsstrecke mit einem Versorgungsanschluß verbunden ist.

Derartige Wasserentnahmearmaturen werden verwendet, um Wasser aus einem Versorgungssystem, beispielsweise dem Wasserleitungssystem in einem Haus, zu entnehmen. Sie sind üblicherweise über einem Waschbecken, einem Spülbecken in der Küche, einer Badewanne oder in einer Dusche angeordnet. Das daraus entnommene Wasser dient dabei zur Reinigung oder Erfrischung des menschlichen Körpers oder wird als Trinkwasser verwendet.

In all diesen Fällen kommt Wasser aus dieser Wasserentnahmearmatur in Kontakt mit dem menschlichen Körper oder wird von ihm aufgenommen, sei es durch Hinunterschlucken beim Trinken oder durch Einatmen, wenn der Benutzer beispielsweise duscht und die dabei entstehenden Dämpfe, Nebel oder Wassertröpfchen einatmet.

Sauberes Trinkwasser ist für die Gesundheit des Menschen eine wesentliche Voraussetzung. In den meisten entwickelten Ländern wird daher Trinkwasser aus öffentlichen Versorgungssystemen mit einer hohen Qualität, insbesondere im Hinblick auf die Sauberkeit und Keimarmut, bereitgestellt. Man kann also davon ausgehen, daß das Wasser, das an Haushalte, Hotels, Gaststätten oder Betriebe als Trinkwasser geliefert wird, den gesetzlichen Anforderungen entspricht, nach denen das Wasser beispielsweise nicht mehr als eine vorgeschriebene Anzahl von Keimen enthalten darf. Da das Wasser in öffentlichen Versorgungssystemen laufend umgewälzt wird, wird diese Vorgabe praktisch durchgängig eingehalten.

Anders sieht es hingegen bei manchen Häusern innerhalb des Hausnetzes aus. Hier gibt es Zapfstellen, die nur selten benutzt werden und damit nicht optimal durchströmt werden. Diese Problematik ergibt sich insbesondere in Wochenend- und Ferienhäusern, Hotels, etc., bei denen die Wasserentnahme nur in längeren Abständen erfolgt. Bei den meisten Wasserentnahmearmaturen gibt es nämlich Toträume, in denen Wasser nach einem Entnahmevorgang verbleibt. Diese Toträume werden erst bei der nächsten Wasserentnahme wieder durchspült. Solange keine Wasserentnahme stattfindet, können sich die Keime, also Mikroorganismen und ähnliches, vermehren. Die Keimbelastung in diesen Toträumen erreicht dann vielfach einen Wert, der unter gesundheitlichen Gesichtspunkten an und für sich nicht mehr zulässig ist. Dementsprechend wird zu Beginn eines Entnahmevorgangs stark belastetes Wasser aus der Wasserentnahmearmatur entnommen. Da sich die Keime vielfach auch an den Wänden der Wasserarmatur, insbesondere in den genannten Totbereichen, ansiedeln, wird auch das nachfolgende Wasser stärker belastet als das unmittelbar aus dem öffentlichen Versorgungssystem stammende Wasser. Üblicherweise wird das entnommene Wasser auch nicht über eine Mindestdauer auf etwa 60 bis 70° C erhitzt. Dementsprechend werden die Keime auch nicht unschädlich gemacht.

Auch die Zugabe von Chlor oder anderen Chemikalien hat hier nur begrenzte Wirkung.

Es ist daher gelegentlich zu beobachten, daß feinporige Filterelemente an die Wasserentnahmearmaturen, beispielsweise Wasserhähne, angeschlossen werden, die Keime bis zu einer vorbestimmten Größe zurückhalten. Allerdings sind derartige Filter oft nicht in der Lage, kleinere Keime, z.B. Viren, zurückzuhalten. Darüber hinaus reichern sich im Filter die Keime regelrecht an und stellen damit erst recht eine Infektionsgefahr dar, vor allem bei der Entsorgung eines derartigen Filters. Man hat weiterhin festgestellt, daß Keime bei längerer Standzeit auch durch Poren hindurchwachsen können, die kleiner als ihr eigener Durchmesser sind. Damit gelangen sie schließlich doch auf die "keimfreie Seite" des Filters und können aus der Wasserarmatur ausgetragen werden.

Der Erfindung liegt die Aufgabe zugrunde, die hygienischen Verhältnisse auch bei selten benutzten Wasserentnahmearmaturen zu verbessern.

Diese Aufgabe wird bei einer Wasserentnahmearmatur dadurch gelöst, daß in der Leitungsstrecke eine UV-Strahlungsabgabeeinrichtung angeordnet ist.

Mit der UV-Strahlungsabgabeeinrichtung wird nun UV-Strahlung, also Licht im ultravioletten Spektralbereich, unmittelbar in der Leitungsstrecke abgegeben und kann somit auf Keime und Mikroorganismen wirken, die sich in dieser Leitungsstrecke befinden. Damit erfolgt eine wirkungsvolle Entkeimung direkt in der Leitungsstrecke, so daß eine früher entstandene Verkeimung des Wassers zumindest teilweise wieder rückgängig gemacht werden kann. Der Begriff "Entkeimung" heißt hier nicht, daß das Wasser keimfrei gemacht wird. Die UV-Strahlen bewirken nämlich nicht in allen Fällen eine Abtötung der Keime und anderer Mikroorganismen. Sie haben unter anderem auch die Wirkung, daß die DNA von Mikroorganismen gestört oder beschädigt werden, so daß sich diese Mikroorganismen nicht mehr oder nicht mehr im gleichen Maße fortpflanzen können. Auch "überleben" statistisch immer einige Mikroorganismen die Bestrahlung. Dies ist aber unkritisch. Wichtig ist, daß die Keimbelastung des Wassers in der Wasserentnahmearmatur selbst herabgesetzt wird, und zwar auch an solchen Stellen, an denen das Wasser bislang längere Zeit gestanden hat. Die Mikroorganismen bzw. Keime werden also direkt "vor Ort" bekämpft und zwar in der Wasserentnahmearmatur selbst, so daß sichergestellt ist, daß das austretende Wasser einen Bereich durchflossen hat, in dem es der UV-Strahlung ausgesetzt war. Damit wird eine deutliche Verringerung der Keimzahl in dem Wasser erzielt.

Vorzugsweise ist die UV-Strahlenabgabeeinrichtung in der Nähe der Ausflußöffnung angeordnet. Damit wird das Wasservolumen, das sich zwischen der UV-Strahlungsabgabeeinrichtung und dem Versorgungsanschluß befindet, möglichst groß gemacht und das Wasservolumen, das sich zwischen der UV-Strahlungsabgabeeinrichtung und der Ausflußöffnung noch befinden kann, möglichst klein gemacht. Man stellt auf diese Weise sicher, daß der allergrößte Teil des entnommenen Wassers an der UV-Strahlungsabgabeeinrichtung vorbeigeflossen ist, um entkeimt zu werden.

Vorzugsweise ist die Ausflußöffnung in einem gegenüber einem Basisteil beweglichen Kopf angeordnet und die UV-Strahlungsabgabeeinrichtung ist in dem Kopf angeordnet. Ein derartiger Kopf kann beispielsweise durch einen Duschkopf gebildet werden, der über einen Schlauch mit einer Wandarmatur verbunden ist. In dem Schlauch bleibt in der Regel Wasser nach der Entnahme stehen. Dort können sich die Keime ungehindert vermehren, wenn der Schlauch nicht regelmäßig durchspült wird. Wenn man nun die UV-Strahlungsabgabeeinrichtung im Kopf, also im Duschkopf, anordnet, wird das zuvor im Schlauch gespeicherte Wasser auf jeden Fall an der UV-Strahlungsabgabeeinrichtung vorbeigeleitet und damit entkeimt.

Hierbei ist besonders bevorzugt, daß der Kopf über eine flexible Leitung mit dem Basisteil verbunden ist und eine Speiseleitung für die UV-Strahlungsabgabeeinrichtung gemeinsam mit der flexiblen Leitung geführt ist. Damit wird die Versorgung der Strahlungsabgabeeinrichtung auch dann sichergestellt, wenn der Kopf gegenüber dem Basisteil bewegt wird. Andererseits wird der Benutzungskomfort nicht gemindert, weil der Benutzer nach wie vor nur einen Schlauch handhaben muß, der dann gegebenenfalls die Wasserzufuhr und die Speiseleitung für den Kopf umfaßt.

Hierbei ist von Vorteil, wenn die Speiseleitung innerhalb der flexiblen Leitung angeordnet ist. Von außen kann man dann gar nicht erkennen, daß Zusatzmaßnahmen zur Entkeimung des Wassers getroffen worden sind. Der Benutzer muß also von seinen bisherigen Gewohnheiten keinen Abstand nehmen.

Vorzugsweise weist die UV-Strahlungsabgabeeinrichtung eine Hauptstrahlenemission mit einer Wellenlänge im Bereich von 250 bis 255 nm auf. Eine derartige Strahlenemission ergibt sich beispielsweise bei der Verwendung von Niederdruck-Quecksilberdampfstrahlern, die ein Emissionsspektrum hauptsächlich bei einer Wellenlänge von 253,7 nm aufweisen. Das Absorptionsspektrum von vielen Mikroorganismen bzw. deren DNA liegt im gleichen Bereich, so daß man bei der Verwendung dieser Hauptstrahlenemission eine recht gute Abtötung oder Vermehrungsreduktion dieser Mikroorganismen erreichen kann und zwar mit einem recht hohen Wirkungsgrad.

In einer bevorzugten Ausgestaltung ist vorgesehen, daß die UV-Strahlungsabgabeeinrichtung als unmittelbar in der Leitungsstrecke angeordneter UV-Strahler ausgebildet ist. In diesem Fall wird das UV-Licht direkt in der Leitungsstrecke erzeugt und dort abgegeben. Transportverluste des UV-Lichts treten praktisch nicht auf. Es muß lediglich elektrische Energie zugeführt werden.

In einer alternativen Ausgestaltung kann vorgesehen sein, daß die UV-Strahlungsabgabeeinrichtung als Ausspeiseanordnung einer UV-lichtdurchlässigen Lichtleitstrecke ausgebildet ist, die UV-Strahlen von einem UV-Strahler in die Leitungsstrecke leitet. In diesem Fall kann man den UV-Strahler außerhalb des gewünschten Einsatzortes anordnen und das UV-Licht mit Hilfe der genannten Lichtleitstrecke an den gewünschten Einsatzort leiten. Diese Ausbildung hat Vorteile, weil die Schutzmaßnahmen gegen Wasser in diesem Fall weniger aufwendig sind, als wenn der in der Regel elektrisch betriebene UV-Strahler unmittelbar in der Leitungsstrecke angeordnet ist. Es kommt also auf den Einsatzzweck an, welche Ausbildung man verwendet.

Vorzugsweise weist die UV-Strahlungsabgabeeinrichtung eine Längserstreckung in Richtung des Verlaufs der Leitungsstrecke auf und gibt im wesentlichen radial dazu UV-Strahlen ab. Die Längserstreckung gewährleistet, daß das vorbeifließende Wasser über einen längeren Zeitraum der UV-Strahlung ausgesetzt ist. Damit ergibt sich eine verbesserte Entkeimung. Die Beeinflussung der Keime ist unter anderem auch von der Beeinflussungszeit abhängig. Aus der Strahlungsstärke und der Behandlungs- oder Beeinflussungszeit ergibt sich die sogenannte Dosis. Je höher die Dosis ist, desto wirkungsvoller ist die Abtötung oder sonstige Beeinträchtigung der Keime.

Mit Vorteil ist ein die UV-Strahlungsabgabeeinrichtung aktivierender Schalter vorgesehen. Dieser Schalter schaltet die UV-Strahlungsabgabeeinrichtung ein und zwar insbesondere dann, wenn Wasser durch die Armatur entnommen werden soll. Der Schalter kann manuell betätigt werden. Er kann aber auch durch die Handhabung der Armatur betätigt werden, beispielsweise dann, wenn ein Duschkopf von der Wandarmatur abgehoben wird oder wenn ein Wasserventil geöffnet wird. Hierbei kann man die Bewegung, die zum Abheben oder Öffnen notwendig sind, ausnutzen, um ein entsprechendes Steuersignal für die Aktivierung der UV-Strahlungsabgabeeinrichtung zu erzeugen.

Bevorzugterweise ist der Schalter hierbei aber als Durchflußschalter ausgebildet. Der Schalter wird also durch das durchfließende Wasser selbstbetätigt. In diesem Fall ist man sicher, daß, sobald Wasser fließt, die UV-Strahlungsabgabeeinrichtung aktiviert wird und das Wasser mit UV-Licht beaufschlagt.

Mit Vorteil ist im Bereich der UV-Strahlungsabgabeeinrichtung ein Filter mit einem vorbestimmten maximalen Porengröße angeordnet. Verschiedene pathogene Keime benötigen eine höhere UV-Strahlungsdosis zur Inaktivierung. Dies betrifft insbesondere bakterielle Zellaglomerate und Protozoen (z.B. Amöben, Cryptosporidien). Hinzu kommt, daß sich beispielsweise der Keim der Legionella innerhalb von größeren Amöben einnistet und damit eine höhere Inaktivierungs-Dosis benötigt, weil er durch die Zellwandung des Wirts geschützt ist. Bei einer einfachen UV-Licht-Bestrahlung entgeht er so vielfach der Inaktivierung. Dies wird nun durch den Filter eingeschränkt. Der Filter gestattet einerseits den Durchfluß von Wasser, gegebenenfalls unter einer geringfügigen Herabsetzung der Strömungsgeschwindigkeit. Die genannten größeren Keime bleiben jedoch in dem Filter hängen und werden dann, weil der Filter im Bereich der UV-Strahlungsabgabeeinrichtung angeordnet ist, von dem UV-Licht beaufschlagt und zwar solange, wie sie in dem Filter hängen. Dies kann durchaus ein längerer Zeitraum sein. Die Chance, die Keime tatsächlich zu inaktivieren steigt damit.

Vorzugsweise ist der Filter hierbei als Matrix aus einem UV-lichtdurchlässigem Material, insbesondere aus Quarzmaterial, gebildet. Das Matrixmaterial, insbesondere das Quarzmaterial, ist für die UV-Strahlung um 254 nm durchlässig und wirkt damit ähnlich wie ein Lichtleiter. Es hat also eine Doppelfunktion. Zum einen hält es die Keime zurück, die damit einer verlängerten Bestrahlungszeit ausgesetzt sind. Zum anderen wird das UV-Licht auch an entferntere Stellen geleitet, so daß nicht die Gefahr einer Abschattung besteht.

Diese vorteilhafte Wirkung wird insbesondere dann verstärkt, wenn das Material in der Matrix untereinander und mit der UV-Strahlungsabgabeeinrichtung eine Vielzahl von Berührungsstellen bildet. Damit ergibt sich eine unmittelbare Lichtleitung von einem "Korn" zum nächsten, nämlich über die Berührungsstellen der einzelnen "Körner", also der Körper, aus denen die Matrix zusammengesetzt ist. Andererseits ergibt sich an jeder "Bruchkante" eine Lichtstreuung, die stochastisch bewirkt, daß ein Teil des UV-Lichtes in die Umgebung austritt. Größere Keime werden damit zurückgehalten und gleichzeitig von allen Seiten einer höheren Strahlungsdosis ausgesetzt, so daß eine Abschattung nicht möglich ist.

Vorzugsweise weist die UV-Strahlungserzeugunseinrichtung eine elektrische Vorschaltanordnung auf, die eine Speisespannung mit einer Frequenz von mehr als 10 kHz, insbesondere 30 kHz oder mehr, erzeugt. Damit läßt sich einerseits bei gleichem Energieeinsatz die UV-Strahlenausbeute steigern, andererseits die Lebensdauer der UV-Strahlenerzeugungseinrichtung erhöhen. Man führt dies darauf zurück, daß bei derartig hohen Frequenzen das zur UV-Strahlenerzeugung durch Gasentladung notwendige Plasma erhalten bleibt, also nicht bei jeder elektrischen Schwingung erneut aufgebaut werden muß.

Vorzugsweise ist die UV-Strahlungserzeugungseinrichtung an allen von außen erreichbaren Teilen einer elektrischen Spannung von maximal 42 V ausgesetzt. Dies ist eine sogenannte Schutz-Kleinspannung. Die von außen erreichbaren Teile liegen nicht frei, sondern sind normalerweise isoliert, aber nicht von einem Gehäuse oder anderen Schutzmaßnahmen abgedeckt. Auch wenn bei einer Beschädigung der Isolierung dann spannungsführende Teile berührt werden, scheidet eine Gefährdung aus. Eine Wasserberührung derartig spannungsführender Teile kann zwar zu einer Beschädigung der Einrichtung führen. Sie führt aber nicht zu einer Gefährdung von Benutzern.

Vorzugsweise ist die Ausflußöffnung gegenüber der Leitungsstrecke abgewinkelt angeordnet. Damit verhindert man, daß der Benutzer mit UV-Licht beaufschlagt werden kann. Das UV-Licht, das sich wie jedes andere Licht nur geradlinig ausbreiten kann, bleibt damit innerhalb der Leitungsstrecke und dient ausschließlich zur Entkeimung des vorbeifließenden Wassers.

Mit Vorteil ist die UV-Strahlungsabgabeeinrichtung als wasserdicht gekapselte Einheit ausgebildet, die mit einem sauerstoffreien Gas, insbesondere Stickstoff, gefüllt ist. Die UV-Strahler müssen vor einem direkten Kontakt mit Wasser geschützt werden. Dies erfolgt dadurch, daß die Einrichtung als wasserdichtgekapselte Einheit ausgebildet ist. In dieser Einheit verbleiben aber Hohlräume. Um die Bildung von Ozon durch kurzwelliges UV-Licht in diesem Gehäuse wie auch die vorzeitige Alterung der Strahler durch eingetragene Feuchtigkeit und/oder Staub zu vermeiden, füllt man diese Hohlräume mit einem sauerstoffreien Gas, wobei sich Stickstoff aufgrund seiner guten Verfügbarkeit und seiner Preisgünstigkeit bewährt hat.

Die Erfindung wird im folgenden anhand von zwei bevorzugten Ausführungsbeispielen in der Verbindung mit der Zeichnung beschrieben. Hierin zeigen:
- Fig. 1: ein erstes Beispiel einer Wasserentnahmearmatur am Beispiel eines Duschkopfes in schematischer Darstellung, teilweise im Schnitt, und
- Fig. 2: eine zweite Ausgestaltung.

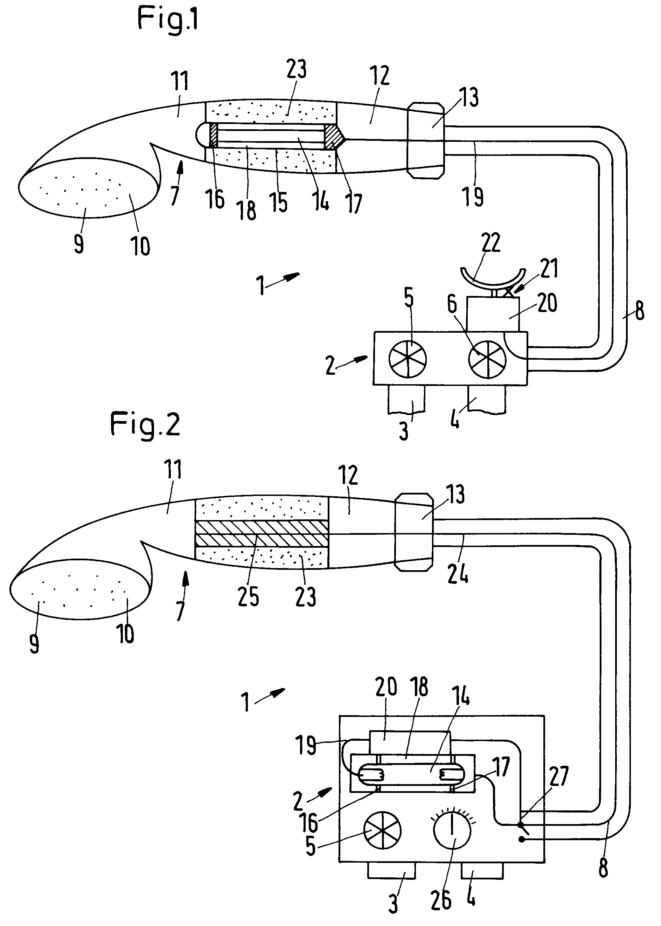

Fig. 1 zeigt eine Wasserentnahmearmatur 1, die im vorliegenden Fall gebildet ist durch eine Wandarmatur 2, die mit einer Kaltwasserleitung 3 und einer Warmwasserleitung 4 verbunden und fest an einer Wand montiert ist. Die Kaltwasserleitung 3 und die Warmwasserleitung 4 bilden hierbei einen Versorgungsanschluß. Dieser wiederum bildet den Teil eines Haus-Wassernetzes und sind über dieses Wassernetz mit einem Anschlußpunkt des Hauses verbunden, gegebenenfalls über eine Heizeinrichtung. Der Anschlußpunkt des Hauses steht in Verbindung mit einem öffentlichen Versorgungsnetz. Denkbar ist aber auch eine Verbindung mit einem Wasserspeicher.

Die Wandarmatur 2 bildet gleichzeitig eine Mischbatterie, in der das Wasser aus den Kalt- und Warmwasseranschlüssen 3, 4 gemischt wird, um eine für den Benutzer angenehme Temperatur zu erhalten. Die Einstellung erfolgt hierbei über Wasserhähne 5, 6, die jeweils ein nicht näher dargestelltes Ventil betätigen.

Die Armatur 1 von Fig. 1 weist ferner einen Duschkopf 7 auf, der über eine flexible Leitung 8 mit der Wandarmatur 2 verbunden ist. Der Duschkopf 7 weist eine Ausflußöffnung 9 auf, die durch ein Siebblech 10 abgedeckt ist. Der Duschkopf 7 weist ferner einen Griffabschnitt 11 auf, in dessen Innern ein Teil der Leitungsstrecke 12 geführt ist, die sich im übrigen durch die Leitung 8 bis zur Wandarmatur 2 fortsetzt. Die Ausflußöffnung 9 ist gegenüber der Leitungsstrecke 12 abgewinkelt, im vorliegenden Fall um etwa 90°.

Die Leitung 8 ist mit Hilfe einer Überwurfmutter 13 mit dem Duschkopf 7 verbunden.

In dem Griffabschnitt 11 des Duschkopfs 7 ist ein UV-Strahler 14 angeordnet, der von einem Quarztauchrohr 15 umgeben ist. Abstandshalter 16, 17 sorgen dafür, daß ein Ringraum 18 zwischen dem Quarztauchrohr 15 und dem UV-Strahler 14 vorhanden bleibt. Dieser Ringraum 18 ist mit Stickstoff oder einem anderen sauerstoffreien, vorzugsweise inerten, Gas gefüllt. Das Tauchrohr 15 bildet ein wasserdichtgekapseltes Gehäuse, in das lediglich eine elektrische Leitung 19 hineingeführt ist. Selbstverständlich sind die elektrischen Anschlüsse wasserdicht ausgeführt. Anstelle eines Quarztauchrohres 15 kann auch ein Tauchrohr aus einem anderen UV-lichtdurchlässigem Material verwendet werden.

Die elektrische Leitung 19 ist durch die flexible Leitung 8 bis zur Wandarmatur 2 geführt. Die Wandarmatur 2 weist ein elektrisches Vorschaltgerät 20 auf, das mit einem Aktivierungsschalter 21 versehen wird. Wenn der Duschkopf 7 von einer Ruheposition auf einer Gabel 22 abgehoben wird, wird das Vorschaltgerät 20 aktiviert und versorgt dann den UV-Strahler 14 über die elektrische Leitung 19 mit einer elektrischen Spannung, so daß der UV-Strahler anfängt, UV-Licht auszusenden.

Die elektrische Vorschaltanordnung erzeugt hierbei eine elektrische Spannung mit einer Frequenz von mehr als 10 kHz, insbesondere von 30 kHz oder mehr. Bei der Verwendung derartig hoher Frequenzen nimmt an, daß das Plasma, das sich bei der Gasentladung zwischen gegenüberliegenden Elektroden des UV-Strahlers 14 aufbaut, nicht wieder vollständig zusammenbricht, bevor bei der nächsten elektrischen Schwingung die nächste Gasentladung erfolgt. Auf diese Weise läßt sich zum einen energiesparender Betrieb erreichen und zum anderen die Lebensdauer des UV-Strahlers 14 erhöhen. Die Spannungen, die über die Leitung 19 übertragen werden, bleiben unterhalb von 42 V, d.h. im Bereich einer Schutz-Kleinspannung. Es reicht aus, wenn sie im Bereich von 12 V liegen.

Der UV-Strahler 14 ist vorzugsweise als Niederdruck-Quecksilberdampfstrahler ausgebildet, d.h. er weist eine Hauptstrahlenemission von einer Wellenlänge im Bereich von 250 bis 255 nm auf. Genauer gesagt liegt die Hauptspektrallinie bei 253,7 nm. Diese Wellenlänge kommt der Hauptabsorptionslinie der DNAs von Mikororganismen sehr nahe, so daß hier ein sehr guter Wirkungsgrad erreicht wird.

Der UV-Strahler 14 weist eine gewisse Längserstreckung auf, die in Richtung der Längserstreckung der Leitungsstrecke 12 ausgerichtet ist. Wasser, das an dem Strahler 14 vorbeifließt, wird also über eine gewisse Zeit der UV-Strahlung ausgesetzt, wodurch eine relativ hohe Strahlungsdosis auf das vorbeifließende Wasser wirken kann.

Diese Wirkung wird noch dadurch erhöht, daß der UV-Strahler 14, der mit dem umgebenden Quarztauchrohr 15 eine UV-Strahlungsabgabeeinrichtung bildet, von einem Filter 23 umgeben ist, der als Matrix aus einem Quarzmaterial oder einem anderen UV-lichtdurchlässigen Material gebildet ist. Verwendet werden kann z.B. Quarz-Bruch einer definierten Partikelgröße oder versintertes oder aufgeschäumtes Quarz (Schaumglas) mit definiertem Poren/Partikel-Durchmesser.

Dieser Filter 23 setzt zum einen die Strömungsgeschwindigkeit des durchfließenden Wassers geringfügig herab. Zum anderen hält er aber größere Keime, beispielsweise bakterielle Zellaglomerate und Protozoen, z.B. Amöben oder Cryptosporidien, zurück. Diese können den Filter 23 nicht ohne weiteres durchqueren. Sie benötigen dazu, wenn sie es überhaupt schaffen, eine längere Zeit. In dieser Zeit sind sie aber der Strahlung des UV-Lichts ausgesetzt. Der Matrixaufbau des Filters 23 bewirkt, daß die Partikel des Filters 23 einerseits dicht an dicht aneinanderliegen und eine Vielzahl von Berührungsstellen untereinander bilden. Andererseits bilden sie auch eine Vielzahl von Berührungsstellen mit dem Quarztauchrohr 15. Damit kann eine direkte Lichtleitung von dem Quarzstrahler 14 in das Innere des Filters 23 erfolgen. Das UV-Licht wird dort von Partikel zu Partikel weitergeleitet und kann so auch entferntere Bereiche im Innern des Duschkopfes 7 erreichen. Bei jeder "Bruchstelle" oder Oberfläche der Partikel erfolgt allerdings ein Austritt eines Teils des UV-Lichts, das dann aber Keime, die sich an dieser Stelle befinden, beaufschlagen kann. Damit überwindet man auch das Problem, daß die Eindringtiefe von UV-Licht bei etwas verschmutztem Wasser stark herabgesetzt wird. Durch den Filter 23 stehen für das UV-Licht praktisch keine größeren freien Weglänge mehr zur Verfügung, in denen es das Wasser durchqueren muß. Die Wasserabschnitte haben vielmehr nur die Länge, die durch den Filter 23 zugelassen wird.

Dadurch, daß die Ausflußöffnung 9 abgewinkelt gegenüber dem Griffabschnitt 11 angeordnet ist, besteht nicht die Gefahr, daß UV-Licht aus der Ausflußöffnung 9 austritt und einen Benutzer gefährdet. Andererseits führt das UV-Licht aber zu einer relativ guten und zuverlässigen Entkeimung des ausfließenden Wassers.

Fig. 2 zeigt eine andere Ausgestaltung, bei der gleiche Elemente mit gleichen Bezugszeichen versehen worden sind.

Im Gegensatz zu der Ausführung nach Fig. 1 weist die Wandarmatur 2 nur noch einen Wasserhahn 5 zur Mengenregelung auf. Die Temperatureinstellung erfolgt über einen Thermostatventil 26.

Ferner ist der UV-Strahler 14 nicht mehr im Duschkopf selbst angeordnet, sondern in der Wandarmatur 2. Er wird aber nach wie vor über Abstandshalter 16, 17 in einem Gehäuse gehalten und von einem Vorschaltgerät 20 über eine elektrische Leitung 19 mit elektrischer Spannung versorgt.

Das UV-Licht gelangt bei dieser Ausgestaltung über einen Lichtleiter 24, der ebenfalls innerhalb der flexiblen Leitung 8, dem Wasserschlauch, zum Duschkopf 7. Am Ende des Lichtleiters 24 ist eine Austrittsanordnung 25 vorgesehen, die das austretende Licht im wesentlichen radial verteilt. Auch hier ist wieder ein Filter 23 so angeordnet, daß er die Austrittsanordnung 25 umgibt.

Die Verwendung eines UV-Strahlers oder eines Lichtleiters mit UV-Austrittsanordnung ist nicht auf einen Duschkopf beschränkt. Man kann die gleiche Lösung auch bei normalen Wasserhähnen anwenden, bei denen die Gefahr besteht, daß dort zwischen dem Ventil und der Austrittsöffnung 9 Wasser verbleibt, wie dies bei einem Duschkopf im Schlauch, d.h. in der flexiblen Leitung 8, zu erwarten ist.

Bei der Ausgestaltung nach Fig. 2 wird die Vorschaltanordnung 20 und damit der UV-Strahler immer dann aktiviert, wenn Wasser in die flexible Leitung 8 hineinfließt. Hierzu ist am Anfang der flexiblen Leitung ein Durchflußschalter 27 vorgesehen.

Sämtliche Spannungen werden unterhalb eines Werts von 42 V gehalten. In den meisten Fällen wird eine Versorgungsspannung von 12 V ausreichen. Dies hat den Vorteil, daß auch bei einer Beschädigung von Isolierungen innerhalb der elektrischen Anordnungen keine Gefährdung eines Benutzers auftreten kann.

## Patentansprüche

1. Wasserentnahmearmatur mit einer Ausflußöffnung, die über eine mindestens ein Ventil aufweisende Leitungsstrecke mit einem Versorgungsanschluß verbunden ist, dadurch gekennzeichnet, daß in der Leitungsstrecke (8, 12) eine UV-Strahlungsabgabeeinrichtung (14, 15; 25) angeordnet ist.

2. Armatur nach Anspruch 1, dadurch gekennzeichnet, daß die UV-Strahlenabgabeeinrichtung (14, 15; 25) in der Nähe der Ausflußöffnung (9) angeordnet ist.

3. Armatur nach Anspruch 1 oder 2, dadurch gekennzeichnet, daß die Ausflußöffnung (9) in einem gegenüber einem Basisteil (2) beweglichen Kopf (7) angeordnet ist und die UV-Strahlungsabgabeeinrichtung (14, 15; 25) in dem Kopf (7) angeordnet ist.

4. Armatur nach Anspruch 3, dadurch gekennzeichnet, daß der Kopf (7) über eine flexible Leitung (8) mit dem Basisteil (2) verbunden ist und eine Speiseleitung (19, 24) für die UV-Strahlungsabgabeeinrichtung (14, 15; 25) gemeinsam mit der flexiblen Leitung (8) geführt ist.

5. Armatur nach Anspruch 4, dadurch gekennzeichnet, daß die Speiseleitung (19, 24) innerhalb der flexiblen Leitung (8) angeordnet ist.

6. Armatur nach einem der Ansprüche 1 bis 5, dadurch gekennzeichnet, daß die UV-Strahlungsabgabeeinrichtung (14, 15; 25) eine Hauptstrahlenemission mit einer Wellenlänge im Bereich von 250 bis 255 nm aufweist.

7. Armatur nach einem der Ansprüche 1 bis 6, dadurch gekennzeichnet, daß die UV-Strahlungsabgabeeinrichtung (14, 15) als unmittelbar in der Leitungsstrecke angeordneter UV-Strahler ausgebildet ist.

8. Armatur nach einem der Ansprüche 1 bis 6, dadurch gekennzeichnet, daß die UV-Strahlungsabgabeeinrichtung (25) als Ausspeiseanordnung einer UV-lichtdurchlässigen Lichtleitstrecke (24) ausgebildet ist, die UV-Strahlen von einem UV-Strahler (14) in die Leitungsstrecke (12) leitet.

9. Armatur nach einem der Ansprüche 1 bis 8, dadurch gekennzeichnet, daß die UV-Strahlungsabgabeeinrichtung eine Längserstreckung in Richtung des Verlaufs der Leitungsstrecke (12) aufweist und im wesentlichen radial dazu UV-Strahlen abgibt.

10. Armatur nach einem der Ansprüche 1 bis 9, dadurch gekennzeichnet, daß ein die UV-Strahlungsabgabeeinrichtung aktivierender Schalter (21, 27) vorgesehen ist.

11. Armatur nach Anspruch 10, dadurch gekennzeichnet, daß der Schalter (27) als Durchflußschalter ausgebildet ist.

12. Armatur nach einem der Ansprüche 1 bis 11, dadurch gekennzeichnet, daß im Bereich der UV-Strahlungsabgabeeinrichtung (14, 15; 25) ein Filter (23) mit einer vorbestimmten maximalen Porengröße angeordnet ist.

13. Armatur nach Anspruch 12, dadurch gekennzeichnet, daß der Filter (23) als Matrix aus einem UV-lichtdurchlässigem Material, insbesondere aus Quarzmaterial, gebildet ist.

14. Armatur nach Anspruch 13, dadurch gekennzeichnet, daß das Material in der Matrix untereinander und mit der UV-Strahlungsabgabeeinrichtung (14, 15; 25) eine Vielzahl von Berührungsstellen bildet.

15. Armatur nach einem der Ansprüche 1 bis 14, dadurch gekennzeichnet, daß die UV-Strahlungserzeugunseinrichtung (14, 15; 25) eine elektrische Vorschaltanordnung (20) aufweist, die eine Speisespannung mit einer Frequenz von mehr als 10 kHz, insbesondere 30 kHz oder mehr, erzeugt.

16. Armatur nach einem der Ansprüche 1 bis 15, dadurch gekennzeichnet, daß die UV-Strahlungserzeugungseinrichtung (14, 15; 25) an allen von außen erreichbaren Teilen einer elektrischen Spannung von maximal 42 V ausgesetzt ist.

17. Armatur nach einem der Ansprüche 1 bis 16, dadurch gekennzeichnet, daß die Ausflußöffnung (9) gegenüber der Leitungsstrecke (12) abgewinkelt angeordnet ist.

18. Armatur nach einem der Ansprüche 1 bis 17, dadurch gekennzeichnet, daß die UV-Strahlungsabgabeeinrichtung (14, 15; 25) als wasserdicht gekapselte Einheit ausgebildet ist, die mit einem sauerstoffreien Gas, insbesondere Stickstoff, gefüllt ist.
